# EUROPÄISCHE PATENTSCHRIFT

(11) **EP 3 594 062 B1**
(45) Veröffentlichungstag und Bekanntmachung des Hinweises auf die Patenterteilung: **18.05.2022**
(21) Anmeldenummer: 19178001.4
(22) Anmeldetag: 04.06.2019
(51) Int. Cl.: B60Q 1/50, B60Q 1/54, B60Q 5/00, E01F 9/662, G05D 1/02, G08G 1/0955, B60Q 1/00, B60Q 1/18, B60Q 1/26, B60Q 1/52

(54) **VERFAHREN ZUM BETREIBEN EINES AUTONOMEN KRAFTFAHRZEUGS**
METHOD FOR OPERATING AN AUTONOMOUS MOTOR VEHICLE
PROCÉDÉ DE FONCTIONNEMENT D'UN VÉHICULE AUTOMOBILE AUTONOME

(30) Priorität: 15.06.2018 DE 102018114383
(43) Veröffentlichungstag der Anmeldung: 15.01.2020
(73) Patentinhaber: MAN Truck & Bus SE, 80995 München (DE)
(72) Erfinder: Wölfel, Christiane, 81539 München (DE); Strauß, Peter, 80801 München (DE); Jiskra, Patrick, 81369 München (DE); Kopp, Frowin, 80539 München (DE); Schwertberger, Walter, 82278 Althegnenberg (DE)
(74) Vertreter: v. Bezold & Partner Patentanwälte - PartG mbB

(56) Entgegenhaltungen:
- EP-A1- 3 556 608
- WO-A1-2017/079803
- DE-A1-102017 005 318
- US-A1- 2017 088 035
- US-A1- 2017 282 784

## Beschreibung

Die Erfindung betrifft ein Verfahren zum Betreiben eines autonomen Kraftfahrzeugs, insbesondere eines Absicherungsfahrzeugs für Wanderbaustellen und Transportfahrzeuge.

Ein aktueller Entwicklungstrend in der Automobilbranche ist die Entwicklung von teil- und vollautonomen Kraftfahrzeugen. Im Rahmen des Forschungsprojekts "aFAS" (autonom fahrendes Absicherungsfahrzeug für Arbeitsstelen auf Bundesautobahnen) wird beispielsweise ein Fahrzeug entwickelt, dass Arbeitsstellen kürzerer Dauer auf Autobahnen absichert.

Die DE 10 2015 210 780 A1 offenbart ein autonomes Fahrzeug. Eine Steuereinheit für das Fahrzeug ist eingerichtet, Umfelddaten von einem oder mehreren Umfeldsensoren des Fahrzeugs zu empfangen. Die Steuereinheit ist weiter eingerichtet, anhand der Umfelddaten mindestens einen Verkehrsteilnehmer in einem Umfeld des Fahrzeugs zu detektieren, und ein oder mehrere Kommunikationsmittel des Fahrzeugs zu veranlassen, eine externe Ausgabe zu generieren, um mit dem Verkehrsteilnehmer zu kommunizieren.

Die DE 10 2014 226 254 A1 betrifft ein Verfahren zum Betreiben einer Signalisierungsvorrichtung eines autonom fahrenden Kraftfahrzeugs, die wenigstens ein Signalisierungsmittel aufweist, das von außerhalb des Kraftfahrzeugs durch andere Verkehrsteilnehmer wahrnehmbar ist. Es ist vorgesehen, dass mittels einer Umfeldsensorik das Umfeld des Kraftfahrzeugs auf andere Verkehrsteilnehmer überwacht wird, und dass in Abhängigkeit von einem erfassten Verkehrsteilnehmer die Signalisierungsvorrichtung angesteuert wird, um dem erfassten Verkehrsteilnehmer eine Information über ein weiteres Verhalten des Kraftfahrzeugs anzuzeigen.

Die WO 2017/079803 A1 offenbart ein unbemanntes autonomes, halbautonomes oder fernsteuerbares Straßenverkehrszeichenfahrzeug für verschiedene Anwendungen in den Bereichen Straßenverkehrsbeschilderung, Notfalleinsatz und Wartung.

Die DE 10 2017 005318 A1 betrifft ein Warnsystem zum Warnen vor einem still stehenden oder sich bewegenden Fahrzeug mit zumindest einem mobilen Roboter. Der zumindest eine Roboter weist dabei eine Warnvorrichtung zum Ausgeben eines optischen und akustischen Warnsignals auf. Der jeweilige Roboter folgt einer Bewegung des Fahrzeugs nach oder fährt dem Fahrzeug voraus.

Die US 2017/282784 A1 offenbart ein Anzeigesystem für ein autonomes landwirtschaftliches Fahrzeug mit einer mehrfarbigen Beleuchtungseinheit.

Die EP 3 556 608 A1 offenbart ein Fahrzeugbeleuchtungssystem, das in einem Fahrzeug vorgesehen ist, das in der Lage ist, in einem autonomen Fahrmodus zu fahren.

Die US 2017/088035 A1 offenbart ein Fahrzeugzustandsanzeigesystem umfassend eine Leuchtanzeige, die einem externen Beobachter, z. B. einem Fußgänger oder einem entfernten Fahrzeug, den Zustand oder die Absicht eines Fahrzeugs anzeigt.

Der Erfindung liegt die Aufgabe zu Grunde, ein alternatives und/oder verbessertes Verfahren zum Betreiben eines autonomen Kraftfahrzeugs zu schaffen, mit dem insbesondere Nachteile im Stand der Technik überwunden werden können.

Die Aufgabe wird gelöst durch die Merkmale der unabhängigen Ansprüche. Vorteilhafte Weiterbildungen sind in den abhängigen Ansprüchen und der Beschreibung angegeben.

Die Erfindung bezieht sich auf ein Verfahren zum Betreiben eines autonomen (z. B. teilautonom oder vollautonom) Kraftfahrzeugs mit den Merkmalen des Anspruchs 1.

Das Verfahren kann den Vorteil bieten, dass andere Verkehrsteilnehmer über die externe Signalausgabe des Kraftfahrzeugs über eine Geschwindigkeit des Kraftfahrzeugs und/oder bezüglich eines gerade durchgeführten autonomen Betriebsmodus informiert, insbesondere gewarnt, werden können. Aus der Signalausgabe können die anderen Verkehrsteilnehmer bspw. direkt eine Geschwindigkeit oder einen Fahrzustand des autonomen Kraftfahrzeugs ableiten. So können beispielsweise im Falle der Verwendung als Absicherungsfahrzeug andere Verkehrsteilnehmer, wie Baustellenarbeiter einer Wanderbaustelle oder andere Baufahrzeuge, über den Fahrzeugzustand informiert und ggf. vor Gefahrsituationen gewarnt werden. Insbesondere mittels einer Kombination von akustischen und visuellen Signalen kann der Betriebszustand des autonomen Kraftfahrzeugs optimal und differenziert kenntlich gemacht werden. In einem Ausführungsbeispiel kann sich die externe Signalausgabe in Abhängigkeit von einer Geschwindigkeit des Kraftfahrzeugs und/oder einem autonomen Betriebsmodus des Kraftfahrzeugs in dessen Ausgabefrequenz, Ausgabeintensität, Ausgaberichtung, Ausgabeort und/oder Ausgabeart (z. B. akustisch und/oder visuell) verändern.

Es ist beispielsweise möglich, dass bei unterschiedlichen Geschwindigkeiten die externe Signalausgabe in unterschiedlichen Ausgabefrequenzen ausgegeben wird. Zum Beispiel kann bei niedrigen Geschwindigkeiten, wie beim Anfahren des Kraftfahrzeugs, eine höhere Ausgabefrequenz als bei hohen Geschwindigkeiten des Kraftfahrzeugs vorgesehen sein. Beispielsweise kann sich die Ausgabeintensität in Form einer Lautstärke und/oder einer Lichtstärke der externen Signalausgabe verändern.

In einem weiteren Ausführungsbeispiel ist eine Schwellenwert-Geschwindigkeit vorgesehen bzw. bereitgestellt, die insbesondere in einem Bereich zwischen 1 km/h und 5 km/h, 10 km/h oder 15 km/h (z. B. bei ungefähr 3 km/h) liegt. Die externe Signalausgabe weist bei einer Geschwindigkeit des Kraftfahrzeugs unterhalb der Schwellenwert-Geschwindigkeit einen sich insbesondere in konstanten Abständen wiederholenden Piepton eines akustischen Signalgebers des Kraftfahrzeugs und/oder ein sich insbesondere in konstanten Abständen wiederholendes Blinken eines visuellen Signalgebers (zum Beispiel Scheinwerfervorrichtung und/oder visueller Signalstreifen) des Kraftfahrzeugs auf. Alternativ oder zusätzlich kann eine Frequenz und/oder eine Intensität (zum Beispiel Lautstärke und/oder Lichtstärke) der externen Signalausgabe bei einer Geschwindigkeit des Kraftfahrzeugs unterhalb der Schwellenwert-Geschwindigkeit höher sein als bei einer Geschwindigkeit des Kraftfahrzeugs oberhalb der Schwellenwert-Geschwindigkeit.

In einer Ausführungsform ist das Kraftfahrzeug in mehreren autonomen Betriebsmodi (zum Beispiel Anfahrbetriebsmodus, Ankoppelbetriebsmodus, Folgebetriebsmodus, Annäherungsbetriebsmodus, Haltebetriebsmodus und/oder Fehlerbetriebsmodus) betreibbar. Alternativ oder zusätzlich ist die externe Signalausgabe in Abhängigkeit von einem gewählten autonomen Betriebsmodus der mehreren autonomen Betriebsmodi veränderbar.

In einer Weiterbildung weisen die mehreren autonomen Betriebsmodi einen Anfahrbetriebsmodus, in dem das Kraftfahrzeug aus dem Stand anfährt (z. B. bis auf die Grenzwert-Schwellengeschwindigkeit, z. B. mit Einlegung eines Gangs, insbesondere Vorwärtsgang), auf. Die mehreren autonomen Betriebsmodi können auch ein Ankoppelbetriebsmodus aufweisen, in dem sich das Kraftfahrzeug an einen anderen Verkehrsteilnehmer (z. B. ein anderes Kraftfahrzeug) zum automatischen Folgen des anderen Verkehrsteilnehmers berührungslos koppelt (elektronische Deichsel). Es können auch ein Folgebetriebsmodus, in dem das Kraftfahrzeug einem anderen Verkehrsteilnehmer, insbesondere in einem vorbestimmen Abstand, folgt und/oder ein Annäherungsbetriebsmodus, in dem sich das Kraftfahrzeug einem von dem Kraftfahrzeug verfolgten Verkehrsteilnehmer, insbesondere auf einen vorbestimmten Abstand hin, annähert, vorgesehen sein. Alternativ oder zusätzlich weisen die mehreren autonomen Betriebsmodi einen Haltebetriebsmodus, in dem das Kraftfahrzeug anhält, und/oder einen Fehlerbetriebsmodus, in dem eine Fehlfunktion des Kraftfahrzeugs, insbesondere eines autonomen Betriebsmodus des Kraftfahrzeugs, erfasst wird (zum Beispiel durch eine Steuereinheit des Kraftfahrzeugs) und das Kraftfahrzeug daraufhin anhält (zum Beispiel veranlasst durch die Steuereinheit). Die mehreren Betriebsmodi sind insbesondere dazu geeignet, das Kraftfahrzeug als ein autonomes Absicherungsfahrzeug zum rückwärtigen Absichern von Wanderbaustellen/Kurzeitbaustellen und Transportfahrzeugen, wie Schwerlast- und Spezialtransportfahrzeuge, zu verwenden.

In einer weiteren Ausführungsform weist die externe Signalausgabe im Anfahrbetriebsmodus einen sich insbesondere in konstanten Abständen wiederholenden Piepton eines akustischen Signalgebers des Kraftfahrzeugs und/oder ein sich insbesondere in konstanten Abständen wiederholendes Blinken eines visuellen Signalgebers (zum Beispiel Scheinwerfervorrichtung und/oder visueller Signalstreifen) des Kraftfahrzeugs auf. Alternativ oder zusätzlich ist eine Frequenz und/oder eine Intensität (zum Beispiel Lautstärke und/oder Lichtstärke) der externen Signalausgabe im Anfahrbetriebsmodus höher als im Ankoppelbetriebsmodus, im Folgebetriebsmodus, im Annäherungsbetriebsmodus und/oder im Haltebetriebsmodus. Damit kann eine erhöhte Aufmerksamkeit gegenüber dem autonomen Kraftfahrzeug beim Anfahren erreicht werden. Dadurch können Gefährdungsrisiken anderer Verkehrsteilnehmern (z. B. auch von Bauarbeitern einer Wanderbaustelle) verringert werden, die sonst ein autonomes Anfahren des Kraftfahrzeugs nicht erwarten würden, insbesondere wenn keine Fahrzeuginsassen im Kraftfahrzeug sind.

In einer Ausführungsvariante weist die externe Signalausgabe im Fehlerbetriebsmodus einen sich insbesondere in konstanten Abständen wiederholenden Piepton eines akustischen Signalgebers des Kraftfahrzeugs und/oder ein sich insbesondere in konstanten Abständen wiederholendes Blinken eines visuellen Signalgebers (zum Beispiel Scheinwerfervorrichtung und/oder visueller Signalstreifen) des Kraftfahrzeugs auf. Alternativ oder zusätzlich ist eine Frequenz und/oder eine Intensität (zum Beispiel Lautstärke und/oder Lichtstärke) der externen Signalausgabe im Fehlerbetriebsmodus höher als im Ankoppelbetriebsmodus, im Folgebetriebsmodus, im Annäherungsbetriebsmodus und/oder im Haltebetriebsmodus. Damit kann eine erhöhte Aufmerksamkeit gegenüber dem autonomen Kraftfahrzeug bei einer Fehlfunktion des autonomen Kraftfahrzeugs erreicht werden. Dadurch können Gefährdungsrisiken anderer Verkehrsteilnehmern (z. B. auch von Bauarbeitern einer Wanderbaustelle) bei einer Fehlfunktion des autonomen Kraftfahrzeugs verringert werden.

In einer weiteren Ausführungsvariante weist die externe Signalausgabe im Folgebetriebsmodus, im Annäherungsbetriebsmodus und/oder im Haltebetriebsmodus lediglich eine visuelle Signalausgabe und/oder keine akustische Signalausgabe auf. Es ist möglich, dass die externe Signalausgabe im Ankoppelbetriebsmodus einen sich insbesondere in konstanten Abständen wiederholenden Piepton eines akustischen Signalgebers des Kraftfahrzeugs und/oder ein sich insbesondere in konstanten Abständen wiederholendes Blinken eines visuellen Signalgebers (zum Beispiel Scheinwerfervorrichtung und/oder visueller Signalstreifen) des Kraftfahrzeugs aufweist. Alternativ oder zusätzlich weist die externe Signalausgabe im Folgebetriebsmodus ein kontinuierliches, insbesondere farbiges (z. B. blaues) Leuchten eines visuellen Signalgebers (zum Beispiel Scheinwerfervorrichtung und/oder visueller Signalstreifen) des Kraftfahrzeugs und/oder einen sich insbesondere in konstanten Abständen wiederholenden Piepton eines akustischen Signalgebers des Kraftfahrzeugs auf. Damit kann in Betriebsmodi, in denen ein geringeres Gefährdungspotenzial für andere Verkehrsteilnehmer bestehen kann, die externe Signalausgabe weniger eindringlich sein.

Zweckmäßig kann bei Stillstand des Kraftfahrzeugs (insbesondere nach einem Anhalten des Kraftfahrzeugs im Haltebetriebsmodus) keine externe Signalausgabe oder lediglich eine visuelle, insbesondere farbige (z. B. grüne) Signalausgabe eines visuellen Signalgebers (zum Beispiel Scheinwerfervorrichtung und/oder visueller Signalstreifen) des Kraftfahrzeugs erfolgen.

In einem weiteren Ausführungsbeispiel erfolgt die externe Signalausgabe unabhängig von einer Erfassung eines anderen Verkehrsteilnehmers (z. B. Kraftfahrzeug, Fahrradfahrer, Fußgänger usw.) in einem Umfeld des Kraftfahrzeugs. Damit können auch Verkehrsteilnehmer, die nicht von einer Umfeldsensorik des Kraftfahrzeugs erfasst würden, durch die externe Signalausgabe informiert oder gewarnt werden.

In einem weiteren Ausführungsbeispiel erfolgt die externe Signalausgabe mittels eines akustischen Signalgebers, der dazu ausgebildet ist, in sich insbesondere konstant wiederholenden Abständen einen akustischen Piepton auszugeben. Damit kann die externe Signalausgabe auf einfache und ähnliche Weise implementiert sein, wie ein üblicher Rückfahrwarner beispielsweise bei Nutzfahrzeugen wie Lastkraftwagen oder Omnibussen, der bereits bekannt ist und auf große Akzeptanz stößt.

In einer Ausführungsform erfolgt die externe Signalausgabe mittels einer Scheinwerfervorrichtung, die (insbesondere) separat und/oder räumlich getrennt zu Abblendlicht-, Fernlicht- und/oder Nebel-Frontscheinwerfern des Kraftfahrzeugs angeordnet ist. Alternativ oder zusätzlich erfolgt die externe Signalausgabe mittels einer Scheinwerfervorrichtung, die an einem Fahrzeugdach des Kraftfahrzeugs und/oder an einer Frontpartie des Kraftfahrzeugs angeordnet ist, insbesondere einer Winterdienstbeleuchtung des Kraftfahrzeugs. Eine solche Winterdienstbeleuchtung ist bei vielen Kraftfahrzeugen im Kommunalbereich verbreitet. Sie muss daher nicht aufwendig nachgerüstet werden und kann auf eine große Akzeptanz beispielsweise bei den Mitarbeitern einet Autobahnmeisterei stoßen. Die Winterdienstbeleuchtung kann sich in idealer Höhe zwischen den Rundumleuchten auf dem Fahrzeugdach und dem Abblendlicht an der Stoßstange befinden und damit sehr gut differenzierbar sein. Insbesondere können andere Verkehrsteilnehmern, wie beispielsweise Bauarbeitern der Wanderbaustellen, mittels Kombination der zwei sensorischen Reize durch die insbesondere als Winterdienstbeleuchtung implementierte Scheinwerfervorrichtung und den auf ähnliche Weise zum Rückfahrwarner implementierten akustischen Signalgeber optimal über den Betriebszustand des autonomen Kraftfahrzeugs informiert werden.

Erfindungsgemäß erfolgt die externe Signalausgabe mittels eines visuellen Signalstreifens, insbesondere eines LED-Streifens, insbesondere an einer Außenlängsseite des Kraftfahrzeugs. Insbesondere kann der visuelle Signalstreifen beim Anfahren des Kraftfahrzeugs (z. B. im Anfahrbetriebsmodus) eine Laufbandbewegung in einer Anfahrrichtung des Kraftfahrzeugs zeigen und/oder bei einer Fahrt des Kraftfahrzeugs mit konstanter Geschwindigkeit konstant leuchten. Es ist auch möglich, dass der visuelle Signalstreifen bei einer Beschleunigung des Kraftfahrzeugs eine Laufbandbewegung in Fahrtrichtung zeigt und/oder bei einer Verzögerung des Kraftfahrzeugs eine Laufbandbewegung entgegen der Fahrtrichtung zeigt. Alternativ oder zusätzlich kann der visuelle Signalstreifen bei einer Änderung des autonomen Betriebsmodus und/oder bei einer Geschwindigkeitsänderung des Kraftfahrzeugs eine angezeigte Farbe verändern.

Die Erfindung betrifft auch ein Kraftfahrzeug mit den Merkmalen des Anspruchs 13.

Zweckmäßig kann eine externe Signalausgabe der Signalsiereinrichtung von außerhalb des Kraftfahrzeugs durch andere Verkehrsteilnehmer wahrnehmbar sein.

Der Begriff "Steuereinheit" kann sich auf eine Elektronik und/oder mechanische Steuerung beziehen, die je nach Ausbildung Steuerungsaufgaben und/oder Regelungsaufgaben übernehmen kann. Auch wenn hierin der Begriff "Steuern" verwendet wird, kann damit gleichsam zweckmäßig auch "Regeln" bzw. "Steuern mit Rückkopplung" umfasst sein.

In einer Ausführungsform ist das Kraftfahrzeug ein Absicherungsfahrzeug mit einer heckseitigen Warnbeleuchtung zum rückwärtigen Absichern eines anderen Verkehrsteilnehmers, insbesondere für Wanderbaustellen (z. B. Kurzzeitbaustelle) und/oder Transportfahrzeuge (z. B. Schwerlast- oder Spezialtransporte).

Die Erfindung betrifft auch eine Verwendung des Kraftfahrzeugs als ein autonomes (z. B. vollautonomes) Absicherungsfahrzeug (insbesondere) ohne Fahrzeuginsassen, beim rückwärtigen Absichern eines anderen Verkehrsteilnehmers, insbesondere für Wanderbaustellen (zum Beispiel Kurzzeitbaustellen) und/oder Transportfahrzeuge (z. B. Schwerlast- oder Spezialtransporte). Somit können beispielsweise bei einem Auffahrunfall auf das Kraftfahrzeug keine Fahrzeuginsassen im Kraftfahrzeug zu Schaden kommen und ein genügend großer Sicherheitsabstand zur Wanderbaustelle oder zum Transportfahrzeug bestehen.

Weitere Einzelheiten und Vorteile der Erfindung werden im Folgenden unter Bezug auf die beigefügten Zeichnungen beschrieben. Es zeigen:
- Figur 1: eine schematische Frontansicht eines beispielhaften Kraftfahrzeugs gemäß der vorliegenden Offenbarung;
- Figur 2: eine schematische Seitenansicht des beispielhaften Kraftfahrzeugs in einem autonomen Anfahrbetriebsmodus;
- Figur 3: eine schematische Seitenansicht des beispielhaften Kraftfahrzeugs in einem autonomen Ankoppelbetriebsmodus;
- Figur 4: eine schematische Seitenansicht des beispielhaften Kraftfahrzeugs in einem autonomen Folgebetriebsmodus;
- Figur 5: eine schematische Seitenansicht des beispielhaften Kraftfahrzeugs in einem autonomen Annäherungsbetriebsmodus; und
- Figur 6: eine schematische Seitenansicht des beispielhaften Kraftfahrzeugs in einem autonomen Haltebetriebsmodus.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

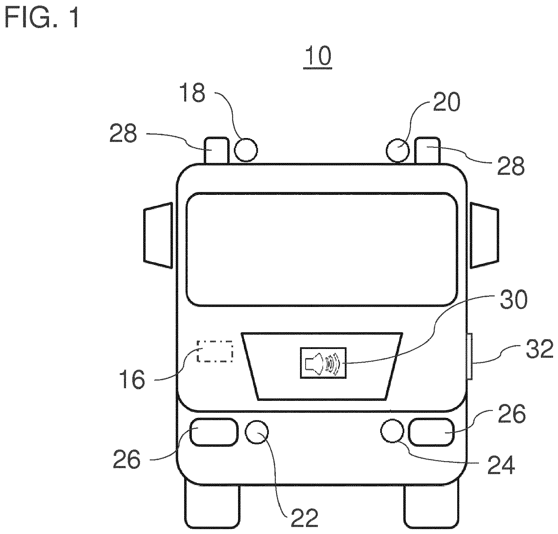

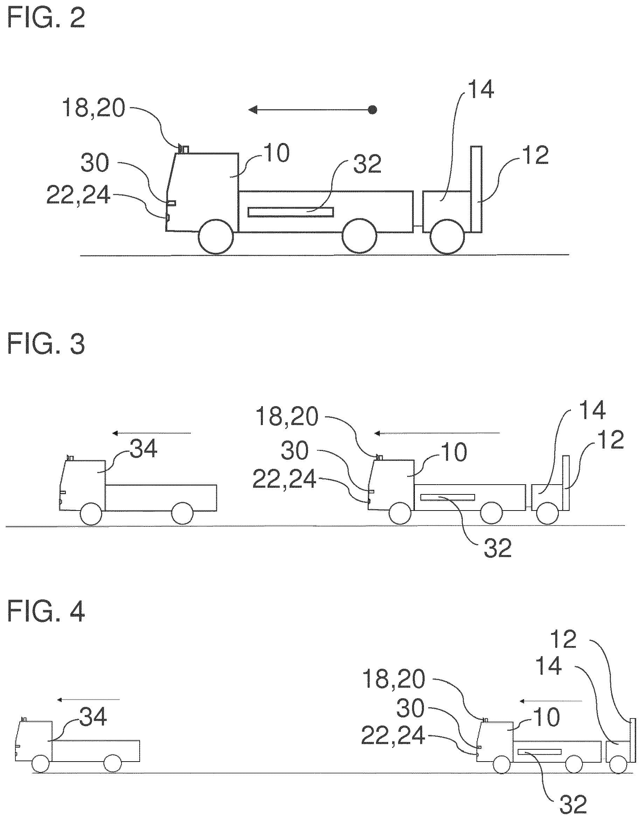

Die Figur 1 zeigt ein beispielhaft als Nutzfahrzeug ausgebildetes Kraftfahrzeug 10. Insbesondere ist das Kraftfahrzeug 10 als ein Lastkraftwagen ausgebildet. Insbesondere ist das Kraftfahrzeug 10 als ein mobiles Absicherungsfahrzeug zur rückwärtigen Absicherung beispielsweise einer mobilen Baustelle oder eines Transportfahrzeugs (zum Beispiel Schwerlasttransport oder Spezialtransport) ausgebildet. Hierzu kann das Kraftfahrzeug eine heckseitige Warnbeleuchtung 12 (vgl. Figuren 2 bis 6) zum Warnen des nachfolgenden Verkehrs aufweisen. Die Warnbeleuchtung 12 kann beispielsweise am Kraftfahrzeug 10 selbst oder an einem Anhänger 14 des Kraftfahrzeugs 10, wie in den Figuren 2 bis 6 dargestellt ist, angeordnet sein.

Das Kraftfahrzeug 10 weist eine schematisch angedeutete Steuereinheit 16 zum autonomen Fahren des Kraftfahrzeugs 10 auf. Beispielsweise kann das Kraftfahrzeug 10, wie hierin beispielsweise unter Bezugnahme auf die Figur 2 bis 6 näher beschrieben ist, vollautonom in verschiedenen autonomen Betriebsmodi, insbesondere auch ohne jegliche Fahrzeuginsassen im Kraftfahrzeug 10, betrieben werden. Zum autonomen Fahren bzw. Führen des Kraftfahrzeugs 10 kann die Steuereinheit 16 Signale von einer (nicht dargestellten) Umgebungserfassungssensorik (z. B. Lidar-, Radar-, Ultraschall- und/oder Laserumgebungserfassungsensorik) betreffend eine Umgebung des Kraftfahrzeugs 10 empfangen. Es ist auch möglich, dass die Steuereinheit 16 Signale von einer (nicht dargestellten) Kommunikationsschnittstelle und/oder einer (nicht dargestellten) Standortbestimmungsvorrichtung (z. B. satellitengestützte Standortbestimmungsvorrichtung, insbesondere GPS-Standortbestimmungsvorrichtung) zum autonomen Fahren des Kraftfahrzeugs 10 empfängt. Die Steuereinheit 16 kann mit alternativen und/oder zusätzlichen Komponenten in Kommunikationsverbindung stehen, um ein autonomes Fahren des Kraftfahrzeugs 10 zu ermöglichen.

Das Kraftfahrzeug 10 weist eine Signalisiereinrichtung zum Ausgeben einer externen Signalausgabe in eine Umgebung des Kraftfahrzeugs 10 auf. Die externe Signalausgabe dient insbesondere zum Warnen und/oder Hinweisen anderer Verkehrsteilnehmer, insbesondere Fußgänger (z. B. Bauarbeiter einer Wanderbaustelle), auf das in einem autonomen Betriebsmodus betriebene Kraftfahrzeug 10.

Die Signalisiereinrichtung kann insbesondere von der Steuereinheit 16 zum Ausgeben von externen Signalen angesteuert werden. Die Steuereinheit 16 kann die Signalisiereinrichtung insbesondere unabhängig davon, ob im Umfeld des Kraftfahrzeugs 10 andere Verkehrsteilnehmer erfasst wurden oder nicht, zum Ausgeben von externen Signalen ansteuern.

In der dargestellten Ausführungsform weist die Signalisiereinrichtung mehrere visuelle Signalgeber, zum Beispiel in Form von Scheinwerfern 18, 20, 22, 24 auf. Die Scheinwerfer 18, 20, 22, 24 sind separat und räumlich getrennt von weiteren Scheinwerfern 26 für Abblendlicht, Fernlicht und Nebellicht angeordnet, um eine Differenzierbarkeit mit diesen zu ermöglichen. Wie in der Figur 1 dargestellt ist, können die Scheinwerfer 18, 20, 22, 24 stattdessen eine sogenannte Winterdienstbeleuchtung insbesondere für Nutzfahrzeuge bilden.

Die Scheinwerfer 18, 20 sind an bzw. auf einem Fahrzeugdach des Kraftfahrzeugs 10 angeordnet. Die Scheinwerfer 18, 20 sind in einer Vorwärtsfahrtrichtung des Kraftfahrzeugs 10 gerichtet. Die Scheinwerfer 18, 20 sind im Bereich des Fahrzeugdachs auf einer Beifahrerseite und auf einer Fahrerseite des Kraftfahrzeugs 10 angeordnet. Aufgrund der Anordnung auf dem Fahrzeugdach können die Scheinwerfer 18, 20 auf eine große Distanz hin von anderen Verkehrsteilnehmern gesehen werden. Die Scheinwerfer 18, 20 können jeweils neben einer Rundumleuchte 28 am Fahrzeugdach angeordnet sein, insbesondere innenliegend von den Rundumleuchten 28 (wie dargestellt ist) oder außenliegend von den Rundumleuchten 28.

Die Scheinwerfer 22, 24 sind an einer Fahrzeugfrontpartie des Kraftfahrzeugs 10 angeordnet. Die Scheinwerfer 22, 24 sind in einer Vorwärtsfahrtrichtung des Kraftfahrzeugs 10 gerichtet. Die Scheinwerfer 22, 24 sind auf der Beifahrerseite und der Fahrerseite des Kraftfahrzeugs 10 angeordnet. Die Scheinwerfer 22, 24 sind innenliegend von den Scheinwerfern 26 für Abblendlicht, Fernlicht und Nebellicht angeordnet.

Es ist möglich, dass die Steuereinheit 16 die Scheinwerfer 18, 20, 22, 24 zum Blinken in unterschiedlichen Frequenzen und zum konstanten Leuchten ansteuern kann. In anderen Ausführungsformen können die Scheinwerfer 18, 20, 22 und/oder 24 beispielsweise auch farbig leuchten, zum Beispiel in grün, gelb, rot und/oder blau.

Alternativ oder zusätzlich kann die Signalisiereinrichtung einen akustischen Signalgeber 30 aufweisen. Die Steuereinheit 16 kann den akustischen Signalgeber 30 beispielsweise zum Ausgeben von Pieptönen, vergleichbar mit einem Rückfahrwarner für Nutzfahrzeuge, zum Beispiel in unterschiedlichen Frequenzen ansteuern. Es ist beispielsweise auch möglich, dass die Steuereinheit 16 den akustischen Signalgeber 30 zum Ausgeben eines konstanten Tons ansteuern kann.

Alternativ oder zusätzlich kann die Signalisiereinrichtung weitere Signalgeber, insbesondere akustische und/oder visuelle Signalgeber aufweisen. Beispielsweise kann die Signalisiereinrichtung einen visuellen Signalstreifen 32 aufweisen. Wie in Figur 1 dargestellt ist, kann der visuelle Signalstreifen 32 beispielsweise auf einer Fahrerlängsseite des Kraftfahrzeugs 10 angeordnet sein. Zusätzliche oder alternative visuelle Signalstreifen können beispielsweise an der Fahrzeugfront, am Fahrzeugheck und/oder an der Beifahrerlängsseite des Kraftfahrzeugs 10 angeordnet sein. Der visuelle Signalstreifen 32 kann beispielsweise ein LED-Streifen sein. Die Steuereinheit 16 kann den visuellen Signalstreifen 32 beispielsweise zum Leuchten in verschiedenen Farben, zum Blinken, zur konstanten Leuchten und/oder zum Darstellen von Laufbandbewegungen insbesondere in oder entgegen einer Vorwärtsfahrtrichtung des Kraftfahrzeugs 10 ansteuern.

Die Steuereinheit 16 steuert die Signalisiereinrichtung zum Ausgeben der externen visuellen und akustischen Signalausgabe derart an, das die Signalausgabe sich in Abhängigkeit von einer Fahrzeuggeschwindigkeit und/oder einem gewählten autonomen Betriebsmodus des Kraftfahrzeugs 10 verändert. Allgemein kann die Steuereinheit 16 die externe Signalausgabe durch die Signalisiereinrichtung beispielsweise in dessen Ausgabefrequenz, Ausgabeintensität (z. B. Lautstärke, Lichtstärke), Ausgaberichtung, Ausgabeort und/oder Ausgabeart (z. B. akustisch und/oder visuell) verändern, wie beispielhaft unter Bezugnahme auf die Figuren 2 bis 6 beschrieben ist. Damit können mittels der Signalisiereinrichtung beispielsweise besonders eindringliche Warnsignale in bestimmten Gefahrsituationen für andere Verkehrsteilnehmer (zum Beispiel andere Kraftfahrzeuge, Fahrradfahrer, Fußgänger usw.) ausgegeben werden, sodass deren Aufmerksamkeit auf das autonome Kraftfahrzeug 10 gerichtet wird.

Solche Gefahrsituationen für andere Verkehrsteilnehmer bspw. insbesondere dann bestehen, wenn das Kraftfahrzeug 10 autonom anfährt. Insbesondere können andere Verkehrsteilnehmer aufgrund des Fehlens jeglicher Fahrzeuginsassen im Kraftfahrzeug 10 nicht erwarten, dass das Kraftfahrzeug 10 plötzlich startet und anfährt. Mittels der Signalisiereinrichtung können die anderen Verkehrsteilnehmer verlässlich und auf einfache Weise gewarnt werden, wenn das Kraftfahrzeug 10 autonom anfährt.

Nachfolgend ist unter Bezugnahme auf die Figuren 2 bis 6 ein besonders bevorzugten Ausführungsbeispiel beschrieben, bei der das Kraftfahrzeug 10 als ein Absicherungsfahrzeug für Wanderbaustellen beispielsweise auf einem Standstreifen einer Autobahn verwendet wird. Insbesondere kann das Kraftfahrzeug 10 als Absicherungsfahrzeug vollkommen autonom und ohne Fahrzeuginsassen betrieben werden. Somit können beispielsweise bei einem Auffahrunfall auf das Kraftfahrzeug 10 keine Fahrzeuginsassen im Kraftfahrzeug 10 zu Schaden kommen. In den Figuren 2 bis 6 können Pfeile über den Fahrzeugen Geschwindigkeiten und Relativgeschwindigkeiten der Fahrzeuge zueinander anzeigen.

Das Kraftfahrzeug 10 kann in unterschiedlichen autonomen Betriebsmodi betrieben werden, zum Beispiel in einem Anfahrbetriebsmodus, in einem Ankoppelbetriebsmodus, in einem Folgebetriebsmodus, in einem Annäherungsbetriebsmodus, in einem Haltebetriebsmodus und in einem Fehlerbetriebsmodus. Nachfolgend ist ein Beispiel beschrieben, bei dem die Signalisiereinrichtung in Abhängigkeit von dem gerade ausgeführten Betriebsmodus veränderlich gesteuert wird. Es ist allerdings auch möglich, die Signalisiereinrichtung entsprechend in Abhängigkeit von einer Geschwindigkeit des Kraftfahrzeugs 10 zu steuern, wobei die Geschwindigkeiten jeweils bestimmten Betriebsmodi zugeordnet sein kann. Beispielsweise kann eine Geschwindigkeit bis zu 3 km/h dem Anfahrbetriebsmodus zugeordnet sein usw.

In Figur 2 ist der autonome Anfahrbetriebsmodus gezeigt. Das Kraftfahrzeug 10 steht zunächst. Die Steuereinheit 16 kann das Kraftfahrzeug 10 starten, einen Vorwärtsgang einlegen und anfahren. Zudem kann die Steuereinheit 16 die Signalisiereinrichtung zum Ausgeben der externen Signalausgabe beispielsweise mittels der Scheinwerfer 18-24 und des akustischen Signalgebers 30 ansteuern. Dies ermöglicht den Arbeitern der Wanderbaustellen zu erkennen, dass das Kraftfahrzeug 10 anfährt. Somit können die Arbeiter den Gefahrbereich um das Kraftfahrzeug 10 verlassen. Außerdem wird ermöglicht, dass die Arbeiter darüber informiert werden, dass das Kraftfahrzeug 10 jetzt im autonomen Anfahrbetriebsmodus betrieben wird. Da die Information durch das Kraftfahrzeug 10 mittels der Signalisiereinrichtung ausgegeben wird, benötigen die Arbeiter hierfür keine zusätzlichen Geräte.

Im Anfahrbetriebsmodus kann die externe Signalausgabe beispielsweise einen sich in konstanten Abständen wiederholender Piepton durch den akustischen Signalgeber 30 und ein sich in konstanten Abständen wiederholendes Blinken der Scheinwerfer 18-24 des Kraftfahrzeugs 10 aufweisen. Da im Anfahrbetriebsmodus ein erhöhtes Gefahrpotenzial für die Arbeiter der Wanderbaustellen besteht, kann die Frequenz der Signale durch den akustischen Signalgeber 30 und die Scheinwerfer 18-24 vergleichsweise hoch sein, insbesondere höher als im Ankoppelbetriebsmodus, im Folgebetriebsmodus, im Annäherungsbetriebsmodus und im Haltebetriebsmodus.

Im Anfahrbetriebsmodus kann das Kraftfahrzeug 10 bis auf eine vorbestimmte Geschwindigkeit, zum Beispiel 3 km/h, beschleunigt werden und diese vorbestimmte Geschwindigkeit gehalten werden. Eine höhere Geschwindigkeit des Kraftfahrzeugs 10 wird erst zugelassen, wenn das Kraftfahrzeug 10 sich im Ankopplungsbetriebsmodus erfolgreich an einen anderen Verkehrsteilnehmer, insbesondere ein vorausfahrendes Baustellenfahrzeug, elektronisch gekoppelt hat (elektronische Deichsel). Wie beschrieben, kann im Anfahrbetriebsmodus somit die externe Signalausgabe bei einer Geschwindigkeit des Kraftfahrzeugs 10 unterhalb der Schwellenwert-Geschwindigkeit von bspw. 3 km/h einen sich in konstanten Abständen wiederholender Piepton durch den akustischen Signalgeber 30 sein. Zusätzlich kann ein sich in konstanten Abständen wiederholendes Blinken der Scheinwerfer 18-24 erfolgen. Ebenso kann eine Frequenz der externen Signalausgabe bei einer Geschwindigkeit des Kraftfahrzeugs 10 unterhalb der Schwellenwert-Geschwindigkeit höher sein als bei einer Geschwindigkeit des Kraftfahrzeugs 10 oberhalb der Schwellenwert-Geschwindigkeit. Die Schwellenwert-Geschwindigkeit kann bspw. in einem Bereich zwischen 1 km/h und 15 km/h, insbesondere kleiner 10 km/h, insbesondere kleiner 5 km/h, liegen.

In Figur 3 ist der autonome Ankoppelbetriebsmodus gezeigt. Das Kraftfahrzeug 10 fährt bereits. Das Kraftfahrzeug 10 koppelt sich berührungslos beispielsweise mittels bidirektionaler Kommunikation an ein vorausfahrendes Baustellenfahrzeug 34. Das Kraftfahrzeug 10 empfängt nun kontinuierlich Informationen von dem vorausfahrenden Baustellenfahrzeug 34, um diesem zu folgen.

Im Ankoppelbetriebsmodus können beispielsweise keine akustischen Signale durch den akustischen Signalgeber 30, sondern nur noch visuelle Signale durch die Scheinwerfer 18-24 ausgegeben werden. Damit kann beispielsweise verhindert werden, dass eine Gewöhnung an die akustischen Signale durch den akustischen Signalgeber 30 geschieht, sodass deren Beachtung durch die Arbeiter insbesondere im Anfahrbetriebsmodus nicht mehr gewährleistet wäre. Es ist allerdings auch möglich, dass zumindest noch im Ankoppelbetriebsmodus eine akustische Signalausgabe durch den akustischen Signalgeber 30 erfolgt, beispielsweise in einer niedrigeren Frequenz als im Anfahrbetriebsmodus.

Im Ankoppelbetriebsmodus kann das Kraftfahrzeug 10 weiterhin mit einer vergleichsweise geringen Geschwindigkeit, zum Beispiel 3 km/h, betrieben werden. Eine Veränderung der externen Signalausgabe durch die Signalisiereinrichtung gegenüber dem Anfahrbetriebsmodus ermöglicht den Arbeitern der Wanderbaustellen zu erkennen, dass sich das Kraftfahrzeug 10 an das vorausfahrende Baustellenfahrzeug 34 elektronisch ankoppelt, um diesem zu folgen.

In Figur 4 ist der autonome Folgebetriebsmodus gezeigt. Das Kraftfahrzeug 10 folgt dem Baustellenfahrzeug 34 in einem vorbestimmten Abstand zum rückwärtigen Absichern der Wanderbaustellen. Der vorbestimmte Abstand kann einstellbar sein und beispielsweise bis zu 80 m oder mehr betragen. Somit kann ein genügender Sicherheitsabstand zwischen dem Kraftfahrzeug 10 und der Wanderbaustellen gewährleistet sein. Der vorbestimmte Abstand zum Baustellenfahrzeug 34 wird hierbei stets gehalten, sodass sich Geschwindigkeitsveränderungen des Baustellenfahrzeugs 34 auf eine Geschwindigkeit des Kraftfahrzeugs 10 entsprechend auswirken. Das Kraftfahrzeug 10 kann im Folgebetriebsmodus auch anhalten, wenn das Baustellenfahrzeug 34 anhält. Beispielsweise kann die externe Signalausgabe im Folgebetriebsmodus ein kontinuierliches, beispielsweise farbiges (z. B. blaues) Leuchten eines visuellen Signalgebers des Kraftfahrzeugs 10 aufweisen.

Im Folgebetriebsmodus können beispielsweise keine akustischen Signale durch den akustischen Signalgeber 30, sondern nur noch visuelle Signale durch die Scheinwerfer 18-24 ausgegeben werden. Hierdurch können die Arbeiter der Wanderbaustellen auch auf große Distanz zum Kraftfahrzeug 10 hin erkennen, dass dieses sicher im Folgebetriebsmodus betrieben wird. Beispielsweise können die Scheine 18-24 im Folgebetriebsmodus kontinuierlich leuchten.

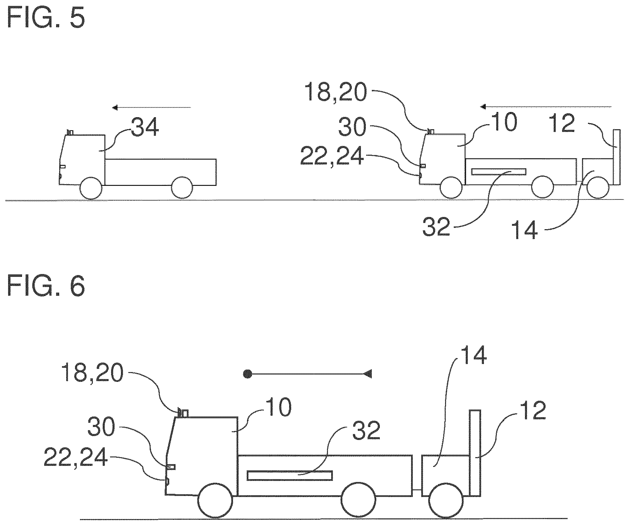

In Figur 5 ist der autonome Annäherungsbetriebsmodus gezeigt. Im Annäherungsbetriebsmodus wird ein Abstand zwischen dem Baustellenfahrzeug 34 und dem autonomen Kraftfahrzeug 10 auf einen vorbestimmten Abstand verringert. Dies kann beispielsweise notwendig sein, wenn durch das Baustellenfahrzeug 34 und das Kraftfahrzeug 10 an Autobahnausfahrten vorbeigefahren wird oder bevor der autonome Haltebetriebsmodus eingeleitet wird. Die externe Signalausgabe durch die Signalisiereinrichtung kann sich im Annäherungsbetriebsmodus von den anderen autonomen Betriebsmodi zumindest teilweise unterscheiden.

In Figur 6 ist der Haltebetriebsmodus des Kraftfahrzeugs 10 gezeigt, bei dem das Kraftfahrzeug bis zum Stillstand gebremst wird. Im Stillstand des Kraftfahrzeugs 10 kann beispielsweise keine Signalausgabe durch die Signalisiereinrichtung erfolgen. Es ist auch möglich, dass im Stillstand des Kraftfahrzeugs lediglich eine visuelle, zum Beispiel grüne, Signalausgabe durch einen visuellen Signalgeber erfolgt, zum Beispiel die Scheinwerfer 18-24. Die externe Signalausgabe durch die Signalisiereinrichtung kann sich im Haltebetriebsmodus von den anderen autonomen Betriebsmodi zumindest teilweise unterscheiden.

Es ist auch möglich, dass das Kraftfahrzeug 10 in einem autonomen Fehlerbetriebsmodus betreibbar ist. Hierbei wird von der Steuereinheit 16 erfasst, dass ein Fehler beim autonomen Fahren des Kraftfahrzeugs 10 vorliegt, zum Beispiel eine Fehlfunktion einer Umgebungssensorik des Kraftfahrzeugs 10 und/oder eine Fehlfunktion bei einer Kommunikation mit dem vorausfahrenden Baustellenfahrzeug 34. Im autonomen Fehlerbetriebsmodus kann das Kraftfahrzeug 10 die Geschwindigkeit verringern und sicher anhalten, um keine Gefahr für andere Verkehrsteilnehmer darzustellen. Beispielsweise kann die externe Signalausgabe durch das Kraftfahrzeug 10 im Fehlerbetriebsmodus einen sich in konstanten Abständen wiederholenden Piepton durch den akustischen Signalgeber 30 und ein sich in konstanten Abständen wiederholendes Blinken durch die Scheinwerfer 18-24 aufweisen. Es ist möglich, dass eine Frequenz der externen Signalausgabe im Fehlerbetriebsmodus höher ist als im Ankoppelbetriebsmodus, im Folgebetriebsmodus, im Annäherungsbetriebsmodus und im Haltebetriebsmodus, um auf das erhöhte Gefahrpotenzial im Fehlerbetriebsmodus hinzuweisen.

Durch die geschwindigkeitsabhängige bzw. betriebsmodusabhängige externe Signalausgabe der Signalisiereinrichtung des Kraftfahrzeugs 10 können die Arbeiter der Wanderbaustellen stets erkennen, in welchem autonomen Betriebsmodus sich das Kraftfahrzeug 10 befindet, bzw. welche Geschwindigkeit das Kraftfahrzeug 10 aufweist. Damit können Gefahrsituationen für die Arbeiter der Wanderbaustellen verhindert werden.

Es ist beispielsweise auch möglich, dass die externe Signalausgabe zumindest teilweise mittels eines visuellen Signalstreifens 32 erfolgt, wie unter Bezugnahme auf Figur 1 beschrieben ist. Beispielsweise kann beim Anfahren des Kraftfahrzeugs 10 im Anfahrbetriebsmodus eine Laufbandbewegung in einer Anfahrrichtung des Kraftfahrzeugs 10 auf dem visuellen Signalstreifen 32 angezeigt werden. Bei einer Fahrt des Kraftfahrzeugs 10 mit konstanter Geschwindigkeit beispielsweise im Ankoppelbetriebsmodus oder im Folgebetriebsmodus kann der visuelle Signalstreifen 32 beispielsweise konstant leuchten. Bei einer Beschleunigung des Kraftfahrzeugs 10 kann eine Laufbandbewegung in Fahrtrichtung auf dem visuellen Signalstreifen 32 angezeigt werden. Bei einer Verzögerung bzw. einer Bremsung des Kraftfahrzeugs 10 kann eine Laufbandbewegung entgegen der Fahrtrichtung auf dem visuellen Signalstreifen 32 angezeigt werden. Es ist beispielsweise auch möglich, dass sich eine Farbe des visuellen Signalstreifens 32 betriebsmodusabhängig und/oder geschwindigkeitsabhängig verändert. Zum Beispiel kann sich beim Beschleunigen des Kraftfahrzeugs 10 eine Farbe des visuellen Signalstreifens 32 von einer Farbe des visuellen Signalstreifens 32 beim Verzögern des Kraftfahrzeugs 10 unterscheiden.

### Bezugszeichenliste

- 10: Kraftfahrzeug
- 12: Warnbeleuchtung
- 14: Anhänger
- 16: Steuereinheit
- 18: Scheinwerfer
- 20: Scheinwerfer
- 22: Scheinwerfer
- 24: Scheinwerfer
- 26: Scheinwerfer
- 28: Rundumleuchte
- 30: Akustischer Signalgeber
- 32: Visueller Signalstreifen
- 34: Baustellenfahrzeug

## Patentansprüche

1. Verfahren zum Betreiben eines autonomen Kraftfahrzeugs (10), insbesondere eines Absicherungsfahrzeugs, aufweisend:
autonomes Betreiben des Kraftfahrzeugs (10); und
Ausgeben einer, insbesondere akustischen und/oder visuellen, externen Signalausgabe für ein Umfeld des Kraftfahrzeugs (10) während des autonomen Betreibens des Kraftfahrzeugs (10), wobei die externe Signalausgabe in Abhängigkeit von einer Geschwindigkeit des Kraftfahrzeugs (10) und/oder einem autonomen Betriebsmodus des Kraftfahrzeugs (10) veränderbar ist oder sich verändert,
**dadurch gekennzeichnet, dass** die externe Signalausgabe mittels eines visuellen Signalstreifens (32) des Kraftfahrzeugs (10) erfolgt, wobei der visuelle Signalstreifen (32):
beim Anfahren des Kraftfahrzeugs (10) eine Laufbandbewegung in einer Anfahrrichtung des Kraftfahrzeugs (10) zeigt; und/oder
bei einer Beschleunigung des Kraftfahrzeugs (10) eine Laufbandbewegung in einer Fahrtrichtung zeigt und/oder
bei einer Verzögerung des Kraftfahrzeugs (10) eine Laufbandbewegung entgegen der Fahrtrichtung zeigt.

2. Verfahren nach Anspruch 1, wobei:
die externe Signalausgabe in Abhängigkeit von einer Geschwindigkeit des Kraftfahrzeugs (10) und/oder einem autonomen Betriebsmodus des Kraftfahrzeugs (10) in dessen Ausgabefrequenz, Ausgabeintensität, Ausgaberichtung, Ausgabeort und/oder Ausgabeart veränderbar ist oder sich verändert.

3. Verfahren nach Anspruch 1 oder Anspruch 2, wobei eine Schwellenwert-Geschwindigkeit vorgesehen ist, die insbesondere in einem Bereich zwischen 1 km/h und 5 km/h, 10 km/h oder 15 km/h liegt, und:
die externe Signalausgabe bei einer Geschwindigkeit des Kraftfahrzeugs (10) unterhalb der Schwellenwert-Geschwindigkeit einen sich insbesondere in konstanten Abständen wiederholenden Piepton eines akustischen Signalgebers (30) des Kraftfahrzeugs (10) und/oder ein sich insbesondere in konstanten Abständen wiederholendes Blinken eines visuellen Signalgebers (18, 20, 22, 24, 32) des Kraftfahrzeugs (10) aufweist; und/oder
eine Frequenz und/oder eine Intensität der externen Signalausgabe bei einer Geschwindigkeit des Kraftfahrzeugs (10) unterhalb der Schwellenwert-Geschwindigkeit höher ist als bei einer Geschwindigkeit des Kraftfahrzeugs (10) oberhalb der Schwellenwert-Geschwindigkeit.

4. Verfahren nach einem der vorherigen Ansprüche, wobei:
das Kraftfahrzeug (10) in mehreren autonomen Betriebsmodi betreibbar ist; und
die externe Signalausgabe in Abhängigkeit von einem gewählten autonomen Betriebsmodus der mehreren autonomen Betriebsmodi veränderbar ist oder sich verändert.

5. Verfahren nach Anspruch 4, wobei die mehreren autonomen Betriebsmodi aufweisen:
einen Anfahrbetriebsmodus, in dem das Kraftfahrzeug (10) aus dem Stand anfährt; und/oder
ein Ankoppelbetriebsmodus, in dem sich das Kraftfahrzeug (10) an einen anderen Verkehrsteilnehmer (34) zum automatischen Folgen des anderen Verkehrsteilnehmers (34) berührungslos koppelt; und/oder
einen Folgebetriebsmodus, in dem das Kraftfahrzeug (10) einem anderen Verkehrsteilnehmer (34), insbesondere in einem vorbestimmen Abstand, folgt; und/oder
einen Annäherungsbetriebsmodus, in dem sich das Kraftfahrzeug (10) einem von dem Kraftfahrzeug (10) verfolgten Verkehrsteilnehmer (34), insbesondere auf einen vorbestimmten Abstand hin, annähert; und/oder
einen Haltebetriebsmodus, in dem das Kraftfahrzeug (10) anhält; und/oder
einen Fehlerbetriebsmodus, in dem eine Fehlfunktion des Kraftfahrzeugs (10), insbesondere eines autonomen Betriebsmodus des Kraftfahrzeugs (10), erfasst wird und das Kraftfahrzeug (10) daraufhin anhält.

6. Verfahren nach Anspruch 5, wobei:
die externe Signalausgabe im Anfahrbetriebsmodus einen sich insbesondere in konstanten Abständen wiederholenden Piepton eines akustischen Signalgebers (30) des Kraftfahrzeugs (10) und/oder ein sich insbesondere in konstanten Abständen wiederholendes Blinken eines visuellen Signalgebers (18, 20, 22, 24, 32) des Kraftfahrzeugs (10) aufweist; und/oder
eine Frequenz und/oder eine Intensität der externen Signalausgabe im Anfahrbetriebsmodus höher ist als im Ankoppelbetriebsmodus, im Folgebetriebsmodus, im Annäherungsbetriebsmodus und/oder im Haltebetriebsmodus.

7. Verfahren nach Anspruch 5 oder Anspruch 6, wobei:
die externe Signalausgabe im Fehlerbetriebsmodus einen sich insbesondere in konstanten Abständen wiederholenden Piepton eines akustischen Signalgebers (30) des Kraftfahrzeugs (10) und/oder ein sich insbesondere in konstanten Abständen wiederholendes Blinken eines visuellen Signalgebers (18, 20, 22, 24, 32) des Kraftfahrzeugs (10) aufweist; und/oder
eine Frequenz und/oder eine Intensität der externen Signalausgabe im Fehlerbetriebsmodus höher ist als im Ankoppelbetriebsmodus, im Folgebetriebsmodus, im Annäherungsbetriebsmodus und/oder im Haltebetriebsmodus.

8. Verfahren nach einem der Ansprüche 5 bis 7, wobei:
die externe Signalausgabe im Folgebetriebsmodus, im Annäherungsbetriebsmodus und/oder im Haltebetriebsmodus lediglich eine visuelle Signalausgabe und/oder keine akustische Signalausgabe aufweist; und/oder
die externe Signalausgabe im Ankoppelbetriebsmodus einen sich insbesondere in konstanten Abständen wiederholenden Piepton eines akustischen Signalgebers (30) des Kraftfahrzeugs (10) und/oder ein sich insbesondere in konstanten Abständen wiederholendes Blinken eines visuellen Signalgebers (18, 20, 22, 24, 32) des Kraftfahrzeugs (10) aufweist; und/oder
die externe Signalausgabe im Folgebetriebsmodus ein kontinuierliches, insbesondere farbiges Leuchten eines visuellen Signalgebers (18, 20, 22, 24, 32) des Kraftfahrzeugs (10) und/oder einen sich insbesondere in konstanten Abständen wiederholenden Piepton eines akustischen Signalgebers (30) des Kraftfahrzeugs (10) aufweist.

9. Verfahren nach einem der vorherigen Ansprüche, wobei:
wobei die externe Signalausgabe unabhängig von einer Erfassung eines anderer Verkehrsteilnehmers in einem Umfeld des Kraftfahrzeugs (10) erfolgt.

10. Verfahren nach einem der vorherigen Ansprüche, wobei:
die externe Signalausgabe mittels eines akustischen Signalgebers (30) erfolgt, der dazu ausgebildet ist, in sich insbesondere konstant wiederholenden Abständen einen akustischen Piepton auszugeben.

11. Verfahren nach einem der vorherigen Ansprüche, wobei:
die externe Signalausgabe mittels einer Scheinwerfervorrichtung (18, 20, 22, 24) erfolgt, die separat und/oder räumlich getrennt zu Abblendlicht-, Fernlicht- und/oder Nebel-Frontscheinwerfern des Kraftfahrzeugs (10) angeordnet ist; und/oder
die externe Signalausgabe mittels einer Scheinwerfervorrichtung (18, 20, 22, 24) erfolgt, die an einem Fahrzeugdach des Kraftfahrzeugs (10) und/oder an einer Frontpartie des Kraftfahrzeugs (10) angeordnet ist, insbesondere einer Winterdienstbeleuchtung des Kraftfahrzeugs (10).

12. Verfahren nach einem der vorherigen Ansprüche, wobei:
der visuelle Signalstreifen (32)ein LED-Streifen ist und/oder an einer Außenlängsseite des Kraftfahrzeugs (10) angeordnet ist, wobei der visuelle Signalstreifen (32) insbesondere:
bei einer Fahrt des Kraftfahrzeugs (10) mit konstanter Geschwindigkeit konstant leuchtet; und/oder
bei einer Änderung des autonomen Betriebsmodus und/oder bei einer Geschwindigkeitsänderung des Kraftfahrzeugs (10) eine angezeigte Farbe verändert.

13. Kraftfahrzeug (10), insbesondere Nutzfahrzeug, aufweisend:
eine Steuereinheit (16), die dazu eingerichtet ist, ein Verfahren nach einem der vorherigen Ansprüche auszuführen; und
einen visuellen Signalstreifen (32), der zum Ausgeben der externen Signalausgabe von der Steuereinheit (16) veranlasst wird.

14. Kraftfahrzeug (10) nach Anspruch 13, wobei das Kraftfahrzeug (10) ein Absicherungsfahrzeug mit einer heckseitigen Warnbeleuchtung (12) zum rückwärtigen Absichern eines anderen Verkehrsteilnehmers (34), insbesondere für Wanderbaustellen und/oder Transportfahrzeuge, ist.

15. Verwendung des Kraftfahrzeugs (10) nach Anspruch 13 oder Anspruch 14 als ein autonomes Absicherungsfahrzeug ohne Fahrzeuginsassen, beim rückwärtigen Absichern eines anderen Verkehrsteilnehmers (34), insbesondere für Wanderbaustellen und/oder Transportfahrzeuge.

## Claims

1. A method for operating an autonomous motor vehicle (10), in particular a safety vehicle, comprising:
autonomously operating the motor vehicle (10); and
outputting an, in particular audible and/or visual, external signal output for an environment of the motor vehicle (10) while the motor vehicle (10) is autonomously operated, the external signal output being adjustable, or being adjusted, on the basis of a velocity of the motor vehicle (10) and/or an autonomous mode of operation of the motor vehicle (10),
**characterized in that** the external signal output is provided by means of a visual signalling strip (32) of the motor vehicle (10), wherein the visual signalling strip (32):
shows a conveyor belt movement in a starting direction of the motor vehicle (10) when the motor vehicle (10) is starting; and/or
shows a conveyor belt movement in a direction of travel when there is an acceleration by the motor vehicle (10) and/or
shows a conveyor belt movement counter to the direction of travel when there is a deceleration by the motor vehicle (10).

2. The method according to Claim 1,
wherein:
the output frequency, output intensity, output direction, output location and/or output type of the external signal output is/are adjustable, and/or is/are adjusted, on the basis of a velocity of the motor vehicle (10) and/or an autonomous mode of operation of the motor vehicle (10).

3. The method according to Claim 1 or Claim 2, wherein there is provision for a threshold value velocity, which is in particular in a range between 1 km/h and 5 km/h, 10 km/h or 15 km/h, and:
the external signal output at a velocity of the motor vehicle (10) below the threshold value velocity comprises a beep, in particular repeating at constant intervals, from an audible signal generator (30) of the motor vehicle (10) and/or a flashing, in particular repeating at constant intervals, from a visual signal generator (18, 20, 22, 24, 32) of the motor vehicle (10); and/or
a frequency and/or an intensity of the external signal output is higher at a velocity of the motor vehicle (10) below the threshold value velocity than at a velocity of the motor vehicle (10) above the threshold value velocity.

4. The method according to one of the preceding claims, wherein:
the motor vehicle (10) can be operated in multiple autonomous modes of operation; and
the external signal output is adjustable, or is adjusted, on the basis of a selected autonomous mode of operation of the multiple autonomous modes of operation.

5. Method according to Claim 4, wherein the multiple autonomous modes of operation comprise:
a starting mode of operation, in which the motor vehicle (10) starts from a standstill; and/or
a coupling mode of operation, in which the motor vehicle (10) contactlessly couples to another road user (34) for the purpose of automatically following the other road user (34); and/or
a following mode of operation, in which the motor vehicle (10) follows another road user (34), in particular at a predetermined distance; and/or
an approaching mode of operation, in which the motor vehicle (10) approaches a road user (34) followed by the motor vehicle (10), in particular to within a predetermined distance; and/or
a stopping mode of operation, in which the motor vehicle (10) stops; and/or
an error mode of operation, in which a malfunction of the motor vehicle (10), in particular of an autonomous mode of operation of the motor vehicle (10), is detected and the motor vehicle (10) then stops.

6. The method according to Claim 5, wherein:
the external signal output in the starting mode of operation comprises a beep, in particular repeating at constant intervals, from an audible signal generator (30) of the motor vehicle (10) and/or a flashing, in particular repeating at constant intervals, from a visual signal generator (18, 20, 22, 24, 32) of the motor vehicle (10); and/or
a frequency and/or an intensity of the external signal output is higher in the starting mode of operation than in the coupling mode of operation, in the following mode of operation, in the approaching mode of operation and/or in the stopping mode of operation.

7. The method according to Claim 5 or Claim 6, wherein:
the external signal output in the error mode of operation comprises a beep, in particular repeating at constant intervals, from an audible signal generator (30) of the motor vehicle (10) and/or a flashing, in particular repeating at constant intervals, from a visual signal generator (18, 20, 22, 24, 32) of the motor vehicle (10); and/or
a frequency and/or an intensity of the external signal output is higher in the error mode of operation than in the coupling mode of operation, in the following mode of operation, in the approaching mode of operation and/or in the stopping mode of operation.

8. The method according to one of Claims 5 to 7, wherein:
the external signal output in the following mode of operation, in the approaching mode of operation and/or in the stopping mode of operation comprises only a visual signal output and/or no audible signal output; and/or
the external signal output in the coupling mode of operation comprises a beep, in particular repeating at constant intervals, from an audible signal generator (30) of the motor vehicle (10) and/or a flashing, in particular repeating at constant intervals, from a visual signal generator (18, 20, 22, 24, 32) of the motor vehicle (10); and/or
the external signal output in the following mode of operation comprises a continuous, in particular coloured, lighting of a visual signal generator (18, 20, 22, 24, 32) of the motor vehicle (10) and/or a beep, in particular repeating at constant intervals, of an audible signal generator (30) of the motor vehicle (10).

9. The method according to one of the preceding claims, wherein:
the external signal output is provided independently of a detection of another road user in an environment of the motor vehicle (10).

10. The method according to one of the preceding claims, wherein:
the external signal output is provided by means of an audible signal generator (30) designed to output an audible beep at in particular constantly repeating intervals.

11. The method according to one of the preceding claims, wherein:
the external signal output is provided by means of a lamp apparatus (18, 20, 22, 24) arranged separately and/or in physical isolation from dipped, full-beam and/or fog headlamps of the motor vehicle (10); and/or
the external signal output is provided by means of a lamp apparatus (18, 20, 22, 24) arranged on a vehicle roof of the motor vehicle (10) and/or on a front part of the motor vehicle (10), in particular winter lights of the motor vehicle (10).

12. The method according to one of the preceding claims, wherein:
the visual signalling strip (32) is an LED strip and/or is arranged on an exterior longitudinal side of the motor vehicle (10), wherein the visual signalling strip (32) in particular
lights constantly when the motor vehicle (10) is travelling at constant velocity; and/or
adjusts a displayed colour when the autonomous mode of operation changes and/or when there is a change of velocity of the motor vehicle (10).

13. A motor vehicle (10), in particular a utility vehicle, comprising:
a control unit (16) that is designed to carry out a method according to one of the preceding claims; and
a visual signalling strip (32) that is prompted by the control unit (16) to output the external signal output.

14. The motor vehicle (10) according to Claim 13, wherein the motor vehicle (10) is a safety vehicle with rear warning lights (12) for providing rear safety for another road user (34), in particular for mobile roadworks and/or transport vehicles.

15. The use of the motor vehicle (10) according to Claim 13 or Claim 14 as an autonomous safety vehicle without vehicle occupants when providing rear safety for another road user (34), in particular for mobile roadworks and/or transport vehicles.

## Revendications

1. Procédé pour faire fonctionner un véhicule automobile (10) autonome, notamment un véhicule de sécurisation, comprenant :
mise en fonctionnement autonome du véhicule automobile (10) ; et
délivrance d'une émission de signal externe, notamment sonore et/ou visuelle, pour un environnement du véhicule automobile (10) pendant le fonctionnement autonome du véhicule automobile (10), l'émission de signal externe pouvant être modifiée ou se modifiant en fonction d'une vitesse du véhicule automobile (10) et/ou d'un mode de fonctionnement autonome du véhicule automobile (10),
**caractérisé en ce que** l'émission de signal externe s'effectue au moyen d'une bande de signalisation visuelle (32) du véhicule automobile (10), la bande de signalisation visuelle (32) :
lors du démarrage du véhicule automobile (10), indiquant un mouvement de tapis roulant dans un sens de démarrage du véhicule automobile (10) ; et/ou
lors d'une accélération du véhicule automobile (10), indiquant un mouvement de tapis roulant dans une direction de déplacement et/ou
lors d'un ralentissement du véhicule automobile (10), indiquant un mouvement de tapis roulant dans le sens inverse du déplacement.

2. Procédé selon la revendication 1, la fréquence d'émission, l'intensité d'émission, la direction d'émission, le lieu d'émission et/ou le mode d'émission de l'émission de signal externe pouvant être modifié(e) ou se modifiant en fonction d'une vitesse du véhicule automobile (10) et/ou d'un mode de fonctionnement autonome du véhicule automobile (10).

3. Procédé selon la revendication 1 ou la revendication 2, une vitesse de seuil étant prévue, laquelle se trouve notamment dans une plage entre 1 km/h et 5 km/h, 10 km/h ou 15 km/h, et :
l'émission de signal externe, dans le cas d'une vitesse du véhicule automobile (10) au-dessous de la vitesse de seuil, présentant un bip sonore d'un transmetteur de signal acoustique (30) du véhicule automobile (10) qui se répète notamment à intervalles constants et/ou un clignotement d'un transmetteur de signal visuel (18, 20, 22, 24, 32) du véhicule automobile (10) qui se répète notamment à intervalles constants ; et/ou
une fréquence et/ou une intensité de l'émission de signal externe, dans le cas d'une vitesse du véhicule automobile (10) au-dessous de la vitesse de seuil, étant supérieure à celle dans le cas d'une vitesse du véhicule automobile (10) au-dessus de la vitesse de seuil.

4. Procédé selon l'une des revendications précédentes, le véhicule automobile (10) pouvant fonctionner dans plusieurs modes de fonctionnement autonome ; et l'émission de signal externe pouvant être modifiée ou se modifiant en fonction d'un mode de fonctionnement autonome sélectionné parmi les plusieurs modes de fonctionnement autonome.

5. Procédé selon la revendication 4, les plusieurs modes de fonctionnement autonome comprenant :
un mode de fonctionnement de démarrage, dans lequel le véhicule automobile (10) démarre depuis l'arrêt, et/ou
un mode de fonctionnement d'accouplement, dans lequel le véhicule automobile (10) s'accouple sans contact à un autre usager de la circulation (34) afin de suivre automatiquement l'autre usager de la circulation (34) ; et/ou
un mode de fonctionnement de suivi, dans lequel le véhicule automobile (10) suit un autre usager de la circulation (34), notamment à une distance prédéterminée ; et/ou
un mode de fonctionnement d'approche, dans lequel le véhicule automobile (10) se rapproche d'un usager de la circulation (34) suivi par le véhicule automobile (10), notamment jusqu'à une distance prédéterminée ; et/ou un mode de fonctionnement d'arrêt, dans lequel le véhicule automobile (10) s'arrête ; et/ou
un mode de fonctionnement de défaut, dans lequel un défaut de fonctionnement du véhicule automobile (10), notamment d'un mode de fonctionnement autonome du véhicule automobile (10), est détecté et de ce fait le véhicule automobile (10) s'arrête.

6. Procédé selon la revendication 5,
l'émission de signal externe, dans le mode de fonctionnement de démarrage, présentant un bip sonore d'un transmetteur de signal acoustique (30) du véhicule automobile (10) qui se répète notamment à intervalles constants et/ou un clignotement d'un transmetteur de signal visuel (18, 20, 22, 24, 32) du véhicule automobile (10) qui se répète notamment à intervalles constants ; et/ou
une fréquence et/ou une intensité de l'émission de signal externe, dans le mode de fonctionnement de démarrage, étant supérieure à celle dans le mode de fonctionnement d'accouplement, le mode de fonctionnement de suivi, le mode de fonctionnement d'approche et/ou le mode de fonctionnement d'arrêt.

7. Procédé selon la revendication 5 ou la revendication 6,
l'émission de signal externe, dans le mode de fonctionnement de défaut, présentant un bip sonore d'un transmetteur de signal acoustique (30) du véhicule automobile (10) qui se répète notamment à intervalles constants et/ou un clignotement d'un transmetteur de signal visuel (18, 20, 22, 24, 32) du véhicule automobile (10) qui se répète notamment à intervalles constants ; et/ou
une fréquence et/ou une intensité de l'émission de signal externe, dans le mode de fonctionnement de défaut, étant supérieure à celle dans le mode de fonctionnement d'accouplement, le mode de fonctionnement de suivi, le mode de fonctionnement d'approche et/ou le mode de fonctionnement d'arrêt.

8. Procédé selon l'une des revendications 5 à 7, l'émission de signal externe, dans le mode de fonctionnement de suivi, le mode de fonctionnement d'approche et/ou le mode de fonctionnement d'arrêt présentant uniquement une émission de signal visuel et/ou une émission de signal sonore ; et/ou
l'émission de signal externe, dans le mode de fonctionnement d'accouplement, présentant un bip sonore d'un transmetteur de signal acoustique (30) du véhicule automobile (10) qui se répète notamment à intervalles constants et/ou un clignotement d'un transmetteur de signal visuel (18, 20, 22, 24, 32) du véhicule automobile (10) qui se répète notamment à intervalles constants ; et/ou
l'émission de signal externe, dans le mode de fonctionnement de suivi, présentant un éclairage continu, notamment en couleur, d'un transmetteur de signal visuel (18, 20, 22, 24, 32) du véhicule automobile (10) et/ou un bip sonore d'un transmetteur de signal acoustique (30) du véhicule automobile (10) qui se répète notamment à intervalles constants.

9. Procédé selon l'une des revendications précédentes, l'émission de signal externe s'effectuant indépendamment d'une détection d'un autre usager du trafic dans un environnement du véhicule automobile (10).

10. Procédé selon l'une des revendications précédentes, l'émission de signal externe s'effectuant au moyen d'un transmetteur de signal acoustique (30), lequel est configuré pour émettre un bip sonore qui se répète notamment à intervalles constants.

11. Procédé selon l'une des revendications précédentes, l'émission de signal externe s'effectuant au moyen d'un dispositif de phare (18, 20, 22, 24), lequel est disposé séparément et/ou isolé spatialement des feux de croisement, feux de route et/ou phares antibrouillard avant du véhicule automobile (10) ; et/ou l'émission de signal externe s'effectuant au moyen d'un dispositif de phare (18, 20, 22, 24), lequel est disposé sur un toit de véhicule du véhicule automobile (10) et/ou sur une partie avant du véhicule automobile (10), notamment un éclairage de service d'hiver du véhicule automobile (10).

12. Procédé selon l'une des revendications précédentes, la bande de signalisation visuelle (32) étant une rampe à LED et/ou étant disposée sur un côté longitudinal extérieur du véhicule automobile (10), la bande de signalisation visuelle (32), notamment :
éclairant de manière constante lors d'un déplacement du véhicule automobile (10) à une vitesse constante ; et/ou modifiant une couleur indiquée lors d'une modification du mode de fonctionnement autonome et/ou dans le cas d'une variation de la vitesse du véhicule automobile (10).

13. Véhicule automobile (10), notamment véhicule utilitaire, comprenant :
une unité de commande (16), qui est conçue pour mettre en œuvre un procédé selon l'une des revendications précédentes ; et
une bande de signalisation visuelle (32), laquelle est amenée par l'unité de commande (16) à émettre l'émission de signal externe.

14. Véhicule automobile (10) selon la revendication 13, le véhicule automobile (10) étant un véhicule de sécurisation équipé d'un éclairage d'avertissement (12) côté arrière destiné à la sécurisation par l'arrière d'une autre usager de la circulation (34), notamment pour des chantiers mobiles et/ou des véhicules de transport.

15. Utilisation du véhicule automobile (10) selon la revendication 13 ou la revendication 14 en tant que véhicule de sécurisation autonome sans occupants lors de la sécurisation par l'arrière d'une autre usager de la circulation (34), notamment pour des chantiers mobiles et/ou des véhicules de transport.
